# EUROPEAN PATENT APPLICATION

(11) **EP 2 806 342 A1**
(43) Date of publication of application: **26.11.2014**
(21) Application number: 13738522.5
(22) Date of filing: 18.01.2013
(51) Int. Cl.: G06F 3/046

(54) **ELECTRONIC DEVICE**

(30) Priority: 18.01.2012 CN 201210015796
(71) Applicant: Huawei Device Co., Ltd., Shenzhen, Guangdong 518129 (CN)
(72) Inventor: CHEN, Lei, Shenzhen Guangdong 518129 (CN)
(74) Representative: Körber, Martin Hans
(86) International application number: PCT/CN2013/070676
(87) International publication number: WO 2013/107382

(57) **Abstract**

The present invention is applicable to the field of electronic technologies and provides an electronic apparatus, where the electronic apparatus is equipped with at least one magnetic sensor for obtaining a change of an external magnetic field and controlling content displayed on a screen according to the change. In the present invention, an electronic apparatus is equipped with at least one magnetic sensor for obtaining a change of an external magnetic field and controlling content displayed on a screen according to the change; therefore, a corresponding operation may be conveniently and quickly performed only by moving a magnetic pen close to the electronic apparatus.

## Description

This application claims priority to Chinese Patent Application No.CN201210015796.9, filed with Chinese Patent Office on January 18, 2012 and entitled "ELECTRONIC APPARATUS", which is incorporated herein by reference in its entirety.

### TECHNICAL FIELD

The present invention relates to the field of electronic technologies, and in particular, to an electronic apparatus.

### BACKGROUND

With rapid development of technologies, it has become a trend for a manufacturer of an electronic apparatus, such as a notebook computer, a mobile phone, or a portable multimedia player, to use a touch panel as a new generation of input interface in place of a traditional keyboard. More specifically, currently the touch panel may be generally divided into a capacitive touch panel and a resistive touch panel. An iPhone, for example, uses the capacitive touch panel as the input interface; therefore, a user may perform an operation such as entering text or selecting a menu by using only a finger. However, to perform the operation, an existing stylus needs to touch a touchscreen, so the operation is not convenient and quick enough.

### SUMMARY

An objective of embodiments of the present invention is to provide an electronic apparatus to resolve a problem with an existing electronic apparatus that a stylus needs to directly touch a touchscreen to perform an operation, so the operation is not convenient and quick enough.

The embodiments of the present invention are implemented as follows: an electronic apparatus, which is equipped with at least one magnetic sensor for obtaining a change of an external magnetic field and controlling content displayed on a screen according to the change.

In the embodiments of the present invention, an electronic apparatus is equipped with at least one magnetic sensor for obtaining a change of an external magnetic field and controlling content displayed on a screen according to the change; therefore, a corresponding operation may be conveniently and quickly performed only by moving a magnetic pen close to the electronic apparatus.

### BRIEF DESCRIPTION OF DRAWINGS

FIG. 1 is schematic structural diagram of an electronic apparatus according to Embodiment 1 of the present invention;
FIG. 2 is a schematic diagram of a magnetic pen serving as an information input device according to Embodiment 1 of the present invention;
FIG. 3 is a schematic diagram of a magnetic pen serving as a direction control device according to Embodiment 1 of the present invention;
FIG. 4 is a schematic structural diagram of an electronic apparatus according to Embodiment 2 of the present invention;
FIG. 5 is a schematic diagram of a magnetic pen serving as an information input device according to Embodiment 2 of the present invention;
FIG. 6 is a schematic diagram of a magnetic pen serving as a direction control device according to Embodiment 2 of the present invention; and
FIG. 7 is a schematic diagram of a magnetic pen serving as an angle control device according to Embodiment 2 of the present invention.

### DESCRIPTION OF EMBODIMENTS

To make the objectives, technical solutions, and advantages of the present invention clearer and more comprehensible, the following further describes the present invention in detail with reference to the accompanying drawings and embodiments. It should be understood that the specific embodiments described herein are merely used to explain the present invention but are not intended to limit the present invention.

In the embodiments of the present invention, an electronic apparatus is equipped with at least one magnetic sensor for obtaining a change of an external magnetic field and controlling content displayed on a screen according to the change; therefore, a corresponding operation may be conveniently and quickly performed only by moving a magnetic pen close to the electronic apparatus.

The following gives a detailed description of implementation of the present invention with reference to specific embodiments. The electronic apparatus in the following embodiments may be a mobile phone, a tablet, or the like.

### Embodiment 1

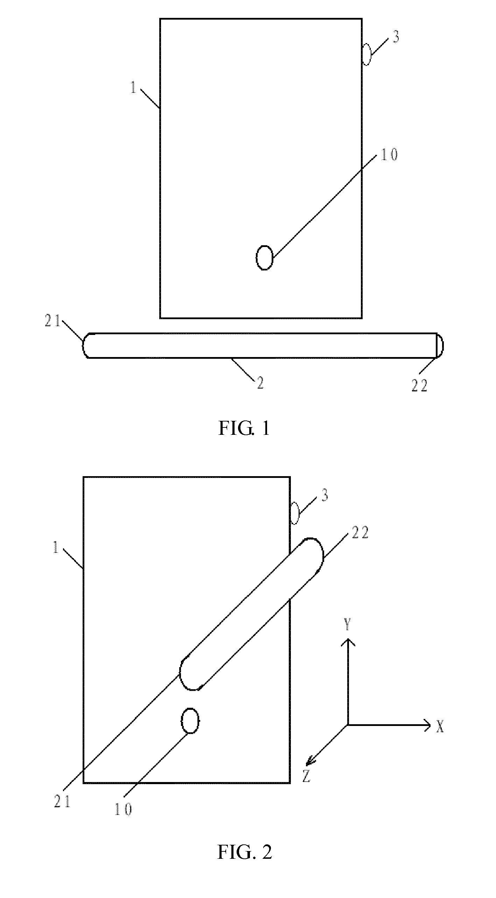

As shown in FIG. 1 to FIG. 3, an electronic apparatus 1 provided in this embodiment of the present invention is equipped with at least one magnetic sensor 10 for obtaining a change of an external magnetic field and controlling content displayed on a screen according to the change. In this case, a corresponding operation may be conveniently and quickly performed only by moving a magnetic pen 2 close to the electronic apparatus 1. In this embodiment, a long bar-shaped magnet serves as the magnetic pen 2 and a movement of the magnetic pen 2 may be monitored only by the magnetic sensor 10 inside the electronic apparatus 1, thereby simplifying a structure of the electronic apparatus and reducing costs.

To enable the magnetic sensor 10 to accurately obtain the change of the external magnetic field, an influence of an intrinsic magnetic field of the environment should be considered. The intrinsic magnetic field of the environment includes two parts: one is a magnetic field generated by an internal magnetic device (for example, an audio device such as a Receiver) of the electronic apparatus 1, and the other is geomagnetic gravity. Because a position and magnitude of a gravitational force of the internal magnetic device of the electronic apparatus 1 are fixed relative to the magnetic sensor 10, and a direction and magnitude of the geomagnetic gravity are also fixed, the influence of the gravitational force and the geomagnetic gravity may be considered during calculation and eliminated.

A method for eliminating the influence of the magnetic force of the internal device of the electronic apparatus 1 is provided herein: all existing magnetic induction chips have a function of rectifying and calibrating the magnetic sensor 10 inside the electronic apparatus 1. Because the electronic apparatus 1 has a fixed internal structure, the magnetic force generated by the internal magnetic device (for example, the audio device such as the Receiver) of the electronic apparatus 1 has a feature that: a direction and magnitude of the magnetic force generated by the internal magnetic device are both fixed relative to the magnetic sensor. All the existing magnetic induction chips have a self-calibration function. Only by shaking the electronic apparatus for several times, a value and the direction of the fixed magnetic force may be fully estimated, and an influence of this part of the magnetic force is eliminated in subsequent measurement.

A method for eliminating the influence of the geomagnetic gravity is further provided herein: the geomagnetic gravity has a feature that: an absolute direction and magnitude of the geomagnetic gravity are fixed, that is, there is always a gravitational force in an absolute direction as the electronic apparatus moves and rolls over. Therefore, before the magnetic pen moves close to the electronic apparatus, a direction of a geomagnetic force in a current state may be learned (magnitude is fixed and may be preset) only according to a current posture of the electronic apparatus determined based on current G-sensor information, and according to magnetic force measurement data obtained by the magnetic sensor. If the electronic apparatus is basically kept stationary (which may be learned according to the G-sensor information) when it is used by a user, a measuring direction of geomagnetic induction at a moment before the magnetic pen is used may be used as a reference value of a geomagnetic direction in this operation, which is deleted in a final calculation. If the user performs the operation in a vehicle, because generally the vehicle does not frequently swerve, a measurement value of the direction of the geomagnetic gravity generated at a moment before the magnetic pen moves close to the electronic apparatus may be used as a reference calibration value. In addition, considering that the magnetic force of the magnetic pen is much greater than the geomagnetic force, the influence on the final calculation result is limited even if there is some interference.

Specifically, when the magnetic pen 2 is perpendicular or nearly perpendicular to the screen of the electronic apparatus 1 and serves as an information input device, one magnetic pole of the magnetic pen 1 serves as an input end 21, and the magnetic sensor 10 inputs information according to a track formed by a movement of the input end 21 close to the screen in the air. The other magnetic pole of the magnetic pen 2 serves as a deleting end 22; the magnetic sensor 10 selects and deletes the information according to a track formed by a movement of the deleting end 22 close to the screen in the air. To delete the information, it is only required to invert the magnetic pen 2 to perform a corresponding operation, which is more convenient and quicker. The information includes, but is not limited to, a character or an image.

For example, in an electronic apparatus system, an N pole of the magnetic pen is preset as the input end 21. When holding the magnetic pen 2 perpendicular to the screen of the electronic apparatus 1, with the N pole close to the screen of the electronic apparatus 1 and an S pole far away from the screen of the electronic apparatus 1, the user may perform such an operation as writing a character or drawing a picture. The user moves the magnetic pen 2 in the air, and the magnetic sensor 10 reads data on three magnetic induction axes (x, y, and z) at regular intervals (for example, 10 ms) and determines a specific spatial coordinate of the N pole of the magnetic pen according to the data. As the magnetic pen 2 moves, the data on the three axes (x, y, and z) that is read by the magnetic sensor 10 is also changing; a movement track of the magnetic pen 2 in the air is formed by connecting spatial coordinates gathered at each time point; and then an input function may be completed by using this track as input information of a handwriting input module.

For another example, in the electronic apparatus system, the S pole of the magnetic pen is preset as the deleting end 22. When the user holds the magnetic pen 2 perpendicular to the screen of the electronic apparatus 1, with the S pole close to the screen of the electronic apparatus 1 and the N pole far away from the screen of the electronic apparatus 1, the character or image may be deleted. In this case, the magnetic pen 2 is equivalent to an eraser. The magnetic sensor 10 reads the data on the three magnetic induction axes (x, y, and z) at regular intervals (for example, 10 ms) and determines a specific spatial coordinate of the S pole of the magnetic pen according to the data. As the magnetic pen 2 moves, the data on the three axes (x, y, and z) that is read by the magnetic sensor 10 is also changing; the movement track of the magnetic pen 2 in the air is formed by connecting the spatial coordinates gathered at each time point; and then an information deleting module may delete the information such as the character or image on the movement track.

This embodiment of the present invention determines a positional relationship of the magnetic pen 2 relative to the electronic apparatus 1 according to a feature of the data read by the magnetic induction chip. As mentioned above, the magnetic pen 2 is made of a long bar-shaped magnet, which has a feature that the magnetic force near the magnetic poles on both ends of the magnetic pen is very strong and has specific directivity while the magnetic force immediately weakens in a place a little farther from the magnetic poles.

When the user holds the magnetic pen 2 perpendicular to the screen of the electronic apparatus 1, with the N pole close to the screen of the electronic apparatus 1, an obvious downward magnetic force perpendicular to the screen of the electronic apparatus 1 is imposed on the magnetic sensor 10, where magnetism of the magnetic sensor may be considered the same as that of the N pole of the magnetic pen. In this case, a feature of the current magnetic force induced by the magnetic sensor is that data on the Z axis (perpendicular to the screen of the electronic apparatus and facing upward) is obviously negative. If this condition is met, it may be determined that the user operates the magnetic pen in a perpendicular direction and puts the N pole close to the electronic apparatus. At this time, the magnetic pen may be used to enter various information.

Likewise, when the user holds the magnetic pen 2 perpendicular to the screen of the electronic apparatus 1, with the S pole close to the screen of the electronic apparatus 1, an obvious upward magnetic force perpendicular to the screen of the electronic apparatus 1 is imposed on the magnetic sensor 10, where the magnetism of the magnetic sensor is opposite to that of the N pole of the magnetic pen. In this case, a feature of the current magnetic force induced by the magnetic sensor is that data on the Z axis (perpendicular to the screen of the electronic apparatus and facing upward) is obviously positive. If this condition is met, it may be determined that the user operates the magnetic pen in a perpendicular direction and puts the S pole close to the electronic apparatus. At this time, the magnetic pen may be used to delete the various information.

After the user completes an operation and before the users performs a next operation, to ensure that the movement of the magnetic pen 2 between the two operations are not misjudged by the electronic apparatus 1, a reset key 3 that separates two pieces of successive information so that the two pieces of successive information may be successively entered or deleted is provided in the electronic apparatus 1, where a function of the reset key 3 is to verify when the movement of the magnetic pen starts to be determined. When the user presses the reset key 3, that is, enabling a function for monitoring the movement of the magnetic pen 2, an internal processor of the electronic apparatus 1 reads the data of the magnetic sensor 10 and determines a current position and a current state of the magnetic pen, and the position and the state are used as an original state, and then the internal processor of the electronic apparatus obtains related data by using the magnetic sensor 10 when the user moves the magnetic pen 2, implementing verification of an original movement position of the magnetic pen. When the user wants to perform a new operation, for example, when the user wants to enter a second character after entering one character, the user may press the reset key 3 again to temporarily disable the function of monitoring the movement of the magnetic pen; and the user can enable the function again when the user takes the magnetic pen 2 back to the original position, that is, pressing the reset key 3 again.

In this embodiment of the present invention, a reset time or a reset distance may be set between two pieces of successive information, which are to be entered or deleted, to distinguish them. The reset time is generally set to 0.2-0.4s, and the reset distance is generally set to 0.5-1.5 cm. For example, when wanting to enter a next character after entering one character, the user pauses for 0.3s in a position where the previous character is entered, and the magnetic sensor 10 deems that the user is to enter the next character. Alternatively, when wanting to enter a next character after entering one character, the user puts the magnetic pen 2 back to a former position after lifting the magnetic pen 2 upward for 1 cm, and the magnetic sensor 10 deems that the user is to enter the next character.

To enter or delete the information here, it is necessary to move the magnetic pen 2. The movement of the magnetic pen 2 causes a change of the data read on the three axes of the magnetic sensor. In fact, a spatial position and the movement track of the magnetic pen 2 may be determined according to magnetic data on the three axes (X/Y/Z) of the magnetic sensor.

The magnetic pen 2 provided in this embodiment of the present invention further has a direction control function. The magnetic pen 2 serves as a direction control device when it is parallel or nearly parallel to the screen of the electronic apparatus 1. When the magnetic pen 2 moves upwards, downwards, forwards, backwards, leftwards, or rightwards, the magnetic sensor 10 performs corresponding direction control for the content (for example, a 3D picture) displayed on the screen according to the change of the magnetic field generated by the movement of the magnetic pen 2. At this time, the magnetic sensor 10 obtains the change of the magnetic field generated by an upward, downward, forward, backward, leftward, or rightward movement of the magnetic pen 2, determines a movement direction of the magnetic pen 2, and implements three-dimensional direction control. The direction control is intuitive and user experience is improved.

For example, when the magnetic sensor 10 determines that the magnetic pen 2 is currently parallel to the screen of the electronic apparatus 1, it indicates that the user wants to control a direction. In this case, the magnetic sensor 10 reads the data on the three magnetic induction axes (x, y, and z) at regular intervals (for example, 10 ms) and determines the specific spatial coordinates of the N pole and the S pole of the magnetic pen according to the data, so as to obtain current spatial positions of the N pole and the S pole of the magnetic pen. When the user moves up the magnetic pen 2 parallel to the screen of the electronic apparatus 1, the magnetic sensor 10 determines that the spatial position of the magnetic pen 2 moves upward according to changes of the spatial positions of the N pole and the S pole of the magnetic pen, thereby controlling the content (for example, the 3D picture) displayed on the screen to move upward. Likewise, control operations in the downward, leftward, and rightward directions performed by the user may be determined.

### Embodiment 2

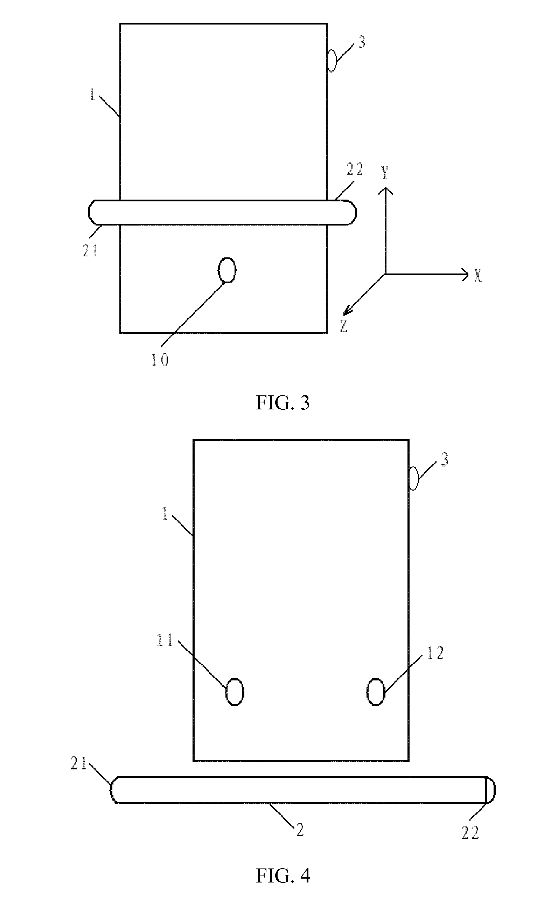

To obtain a change of an external magnetic field more accurately, a first magnetic sensor 11 and a second magnetic sensor 12 are provided within the electronic apparatus 1, where the first magnetic sensor 11 and the second magnetic sensor 12 are respectively located on the left side and the right side of the electronic apparatus 1, as shown in FIG. 4 to FIG. 7. Certainly, more magnetic sensors indicate more accurate operations and control. When the magnetic pen 2 is parallel or nearly parallel to a screen of the electronic apparatus 1, data on a Z axis that is read by one of the two magnetic sensors is positive while data on a Z axis that is read by the other magnetic sensor is negative; determination may be made based on this condition.

For example, if the first magnetic sensor 11 and the second magnetic sensor 12 determine that the magnetic pen 2 is currently parallel to the screen of the electronic apparatus 1, it indicates that a user wants to control a direction. In this case, the first magnetic sensor 11 and the second magnetic sensor 12 read data on three magnetic induction axes (x, y, and z) at regular intervals (for example, 10 ms) and determine specific spatial coordinates of an N pole and an S pole of the magnetic pen according to the data, thereby obtaining current spatial positions of the N pole and the S pole of the magnetic pen. When the user moves forward the magnetic pen 2 parallel to the screen of the electronic apparatus 1, the first magnetic sensor 11 and the second magnetic sensor 12 determine that the spatial position of the magnetic pen 2 moves forward according to changes of the spatial positions of the N pole and the S pole of the magnetic pen, thereby controlling content (for example, a 3D picture) displayed on the screen to move forward. Likewise, control operations in the downward, leftward, and rightward directions performed by the user may be determined.

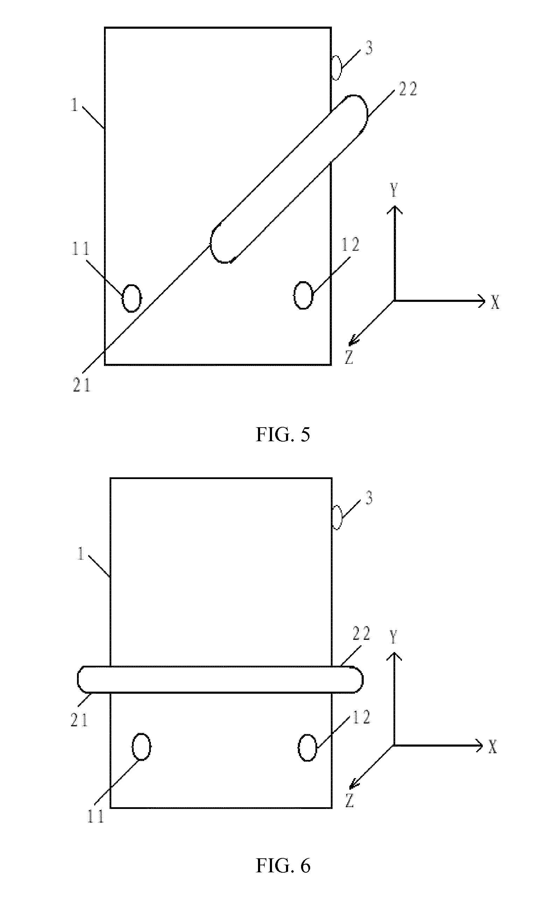

In addition, when the user holds the magnetic pen 2 perpendicular to the screen of the electronic apparatus 1, with the N pole close to the screen of the electronic apparatus 1, features of a current magnetic force induced by the two magnetic sensors at this time are that data on the Z axis (perpendicular to the screen of the electronic apparatus and facing upward) is obviously negative, and on the X axis, a value read by the first magnetic sensor 11 located on the left side of the screen is a negative value while a value read by the second magnetic sensor 12 located on the right side of the screen is a positive value, as shown in FIG. 5. If the three conditions are met, it may be determined that the user operates the magnetic pen 2 in a perpendicular direction and puts the N pole close to the electronic apparatus 1. At this time, the magnetic pen 2 may be used to enter various information. The information includes, but is not limited to, a character or an image.

For example, in an electronic apparatus system, the N pole of the magnetic pen is preset as an input end 21. When the user holds the magnetic pen 2 perpendicular to the screen of the electronic apparatus 1, with the N pole close to the screen of the electronic apparatus 1 and the S pole far away from the screen of the electronic apparatus 1, the user may perform such an operation as writing a character or drawing a picture. The user moves the magnetic pen 2 in the air, and the magnetic sensor reads the data on the three magnetic induction axes (x, y, and z) at regular intervals (for example, 10 ms) and determines the specific spatial coordinate of the N pole of the magnetic pen according to the data. As the magnetic pen 2 moves, the data on the three axes (x, y, and z) that is read by the magnetic sensor is also changing; a movement track of the magnetic pen 2 in the air is formed by connecting the spatial coordinates gathered at each time point; and then an input function may be completed by using this track as input information of a handwriting input module.

Likewise, when the user holds the magnetic pen 2 perpendicular to the screen of the electronic apparatus 1, with the S pole close to the screen of the electronic apparatus 1, features of a current magnetic force induced by the two magnetic sensors at this time are that data on the Z axis(perpendicular to the screen of the electronic apparatus and facing upward) is obviously positive, and on the X axis, a value read by the first magnetic sensor 11 located on the left side of the screen is a positive value while a value read by the second magnetic sensor 12 located on the right side of the screen is a negative value. If the three conditions are met, it may be determined that the user operates the magnetic pen in the perpendicular direction and puts the S pole close to the electronic apparatus. At this time, the magnetic pen may be used to delete the various information.

For another example, in the electronic apparatus system, the S pole of the magnetic pen is preset as a deleting end 22. When the user holds the magnetic pen 2 perpendicular to the screen of the electronic apparatus 1, with the S pole close to the screen of the electronic apparatus 1 and the N pole far away from the screen of the electronic apparatus 1, the character or image may be deleted. In this case, the magnetic pen is equivalent to an eraser. The magnetic sensor reads the data on the three magnetic induction axes (x, y, and z) at regular intervals (for example, 10 ms) and determines the specific spatial coordinate of the S pole of the magnetic pen according to the data. As the magnetic pen 2 moves, the data on the three axes (x, y, and z) that is read by the magnetic sensor is also changing; the movement track of the magnetic pen 2 in the air is formed by connecting the spatial coordinates gathered at each time point; and then an information deleting module may delete the information such as the character or image on the movement track.

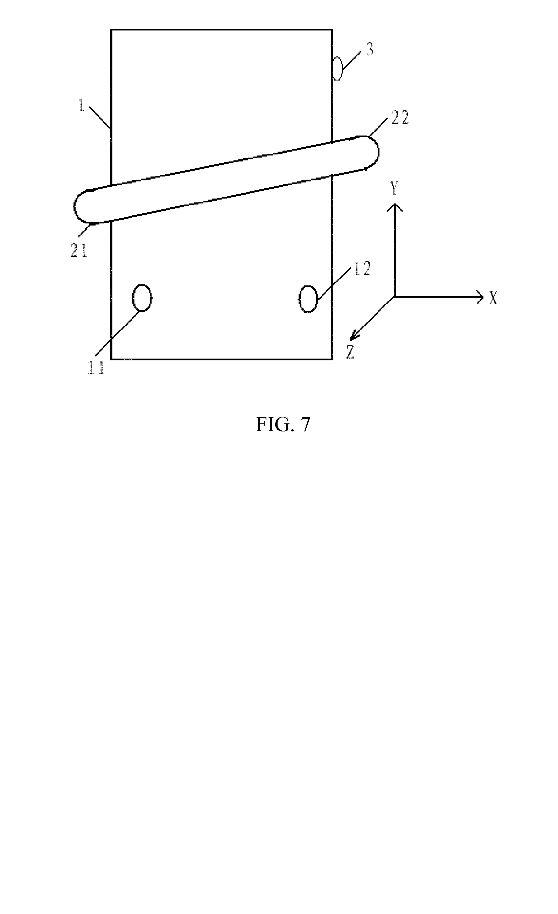

In addition, when the magnetic pen 2 is parallel or nearly parallel to the screen of the electronic apparatus 1, the magnetic pen 2 is further used as an angle control device. When the magnetic pen 2 rotates clockwise or counterclockwise in an original position, the first magnetic sensor 11 and the second magnetic sensor 12 perform corresponding angle control for the content displayed on the screen according to the change of the magnetic field generated by rotation of the magnetic pen. When the magnetic pen deflects from a horizontal direction shown in FIG. 6 to an inclined direction shown in FIG. 7, the two magnetic sensors separately determine relative spatial positions of the two magnetic poles because the first magnetic sensor 11 on the left side of the electronic apparatus 1 is mainly affected by the N pole while the second magnetic sensor 12 on the right side is mainly affected by the S pole; and a rough deflecting direction and deflecting angle of the magnetic pen 2 can be determined by connecting the two relative positions and comparing the two relative positions with a horizontal line. Accordingly, an angle control module is provided inside the electronic apparatus to control an angle of the content displayed on the screen.

In this embodiment of the present invention, an electronic apparatus is equipped with at least one magnetic sensor for obtaining a change of an external magnetic field and controlling content displayed on a screen according to the change; therefore, a corresponding operation may be conveniently and quickly performed only by moving a magnetic pen close to the electronic apparatus. The foregoing magnetic pen serves as a direction control device when it is parallel or nearly parallel to the screen of the electronic apparatus. The magnetic sensor obtains the change of the magnetic field generated by an upward, downward, forward, backward, leftward, or rightward movement of the magnetic pen, determines a movement direction of the magnetic pen, and implements three-dimensional direction control. The direction control is intuitive and user experience is improved. In addition, a long bar-shaped magnet serves as the magnetic pen and a movement condition of the magnetic pen may be monitored only by the magnetic sensor inside the electronic apparatus, thereby simplifying a structure of the electronic apparatus and reducing costs.

The foregoing descriptions are merely exemplary embodiments of the present invention, but are not intended to limit the present invention. Any modification, equivalent replacement, or improvement made without departing from the spirit and principle of the present invention should fall within the protection scope of the present invention.

## Claims

1. An electronic apparatus, wherein the electronic apparatus is equipped with at least one magnetic sensor for obtaining a change of an external magnetic field and controlling content displayed on a screen according to the change.

2. The electronic apparatus according to claim 1, wherein the external magnetic field is changed by moving or rotating a long bar-shaped magnetic pen, and both ends of the magnetic pen are magnetic poles with opposite magnetism.

3. The electronic apparatus according to claim 2, wherein the magnetic pen serves as an information input device when the magnetic pen is perpendicular or nearly perpendicular to the screen; one magnetic pole of the magnetic pen serves as an input end at this time, and the magnetic sensor inputs the information according to a track formed by a movement of the input end close to the screen in the air.

4. The electronic apparatus according to claim 3, wherein the magnetic pen serves as an information deleting device when the magnetic pen is perpendicular or nearly perpendicular to the screen; the other magnetic pole of the magnetic pen serves as a deleting end at this time, and the magnetic sensor selects and deletes the information according to a track formed by a movement of the deleting end close to the screen in the air.

5. The electronic apparatus according to claim 3 or 4, wherein the electronic apparatus is equipped with a reset key, which is configured to enter or delete two pieces of successive information separately.

6. The electronic apparatus according to claim 3 or 4, wherein a reset time or a reset distance is set between two pieces of successive information, which are to be entered or deleted, to distinguish them.

7. The electronic apparatus according to claim 1, wherein a magnetic pen serves as a direction control device when the magnetic pen is parallel or nearly parallel to the screen; the magnetic sensor performs corresponding direction control for the content displayed on the screen according to a magnetic field change generated by a movement of the magnetic pen, when the magnetic pen moves upwards, downwards, forwards, backwards, leftwards, or rightwards.

8. The electronic apparatus according to claim 1, 2, 3, 4, or 7, wherein the number of the magnetic sensors is two, which are respectively located on the left side and the right side of the electronic apparatus.

9. The electronic apparatus according to claim 8, wherein the magnetic pen serves as an angle control device when the magnetic pen is parallel or nearly parallel to the screen; and the magnetic sensors on the left side and the right side perform corresponding angle control for the content displayed on the screen according to a magnetic field change generated by rotation of the magnetic pen, when the magnetic pen rotates clockwise or counterclockwise in an original position.
